# EUROPÄISCHE PATENTSCHRIFT

(11) **EP 4 426 598 B1**
(45) Veröffentlichungstag und Bekanntmachung des Hinweises auf die Patenterteilung: **31.12.2025**
(21) Anmeldenummer: 22813467.2
(22) Anmeldetag: 01.11.2022
(51) Int. Cl.: B62B 5/00, A63B 55/60, B62B 3/12

(54) **FAHRZEUG MIT EINER ANTRIEBSEINHEIT UND EINER DAMIT LÖSBAR VERBINDBAREN APPLIKATION**
VEHICLE COMPRISING A DRIVE UNIT AND AN APPLICATION THAT CAN BE DETACHABLY CONNECTED THERETO
VÉHICULE DOTÉ D'UNE UNITÉ D'ENTRAÎNEMENT ET D'UNE APPLICATION POUVANT ÊTRE RELIÉE DE MANIÈRE LIBÉRABLE À CELLE-CI

(30) Priorität: 02.11.2021 DE 102021128491
(43) Veröffentlichungstag der Anmeldung: 11.09.2024
(73) Patentinhaber: LudwigG-Golf GmbH, 38104 Braunschweig (DE)
(72) Erfinder: PRÜSS, Ludwig, 38104 Braunschweig (DE)
(74) Vertreter: Gramm, Lins & Partner Patent- und Rechtsanwälte PartGmbB
(86) Internationale Anmeldenummer: PCT/EP2022/080463
(87) Internationale Veröffentlichungsnummer: WO 2023/078876

(56) Entgegenhaltungen:
- WO-A1-2007/085787
- DE-A1- 102011 087 072
- US-A- 5 222 596
- US-A1- 2007 080 002
- US-A1- 2018 318 678
- US-S- D 523 638

## Beschreibung

Die Erfindung betrifft ein Fahrzeug mit einer elektromotorisch betriebenen Antriebseinheit und einer mit der Antriebseinheit lösbar verbindbaren Applikation, wobei die Antriebseinheit zwei an einem Achsrohr gegenüberliegend angeordnete, einzeln antreibbare Antriebsräder und ein an einem mittig mit dem Achsrohr verbundenen Längsträger angeordnetes drittes Rad aufweist.

Ein solches Fahrzeug ist beispielsweise aus der DE 10 2012 218 400 A1 bekannt. Die Applikation ist eine Golftasche, die auf die Antriebseinheit aufgesetzt und an ihr befestigt werden kann. Das Fahrzeug wird somit im Golfsport eingesetzt. Über eine Lenkstange, die die Golftasche abstützt, kann der Golftrolley bedient werden. Bezogen auf die Fahrtrichtung nach vorne sind die Antriebsräder hinten und das dritte Rad vorn angeordnet. Die Antriebsräder sind einzeln elektromotorisch angetrieben, wodurch die Antriebseinheit steuerbar ist.

Nachteilig an einem solchen Fahrzeug ist, dass die Verbindung der Applikation mit der Antriebseinheit umständlich zu handhaben ist und insbesondere dann, wenn es sich bei der Applikation um eine Golftasche handelt, diese sorgsam ausgerichtet werden muss, damit der Golftrolley stabil fährt. Der Schwerpunkt einer Golftasche liegt in der Regel sehr weit oben, weil die Golfschläger mit ihren Schäften von oben in die Tasche eingesetzt werden und die schweren Schlägerköpfe aus der Tasche oben herausschauen. Wird die Golftasche nicht sorgsam gegenüber dem Golftrolley ausgerichtet und befestigt, besteht aufgrund des hohen Gesamtschwerpunktes immer das Risiko, dass der Golftrolley im Gelände des Golfplatzes umkippt.

Aus der GB 2 434 567 A ist ein angetriebener Golftrolley bekannt, der aus einer Antriebseinheit besteht, auf die das Golfbag aufgesetzt und selbstragend an dieser an einem Verriegelungsmittel verriegelt werden kann.

Die DE 20 2007 005 290 U1 offenbart einen über zwei gemeinsam ein- und ausschaltbare Elektromotoren angetriebenen Golftrolley, bei dem die Antriebsgeschwindigkeiten der beiden Elektromotoren während der Fahrt relativ zueinander veränderbar sind.

Die DE102011087072A1 beschreibt einen elektrisch angetriebenen Trolley, der z.B. als elektrischer Golfwagen zum Transport von Golftaschen verwendet wird und ein Sensorsystem zur Steuerung im Griff aufweist.

Die WO2007085767A1 beschreibt einen Golftrolley, der mit einer ohne Unterstützung aufrecht stehfähigen Golfschlägertasche verbunden werden kann.

Die US 2018/0318678A1 beschreibt einen Golftrolley mit einem Schnellkupplungselement zum schnellen Verbinden der Golfschlägertasche mit dem Golftrolley, sowie mit einem Löseelement, das mit dem Schnellkupplungselement verbunden und zur Trennung der Tasche von dem Golftrolley dient.

Die US 2007/0080002A1 beschreibt einen Antriebsmechanismus für Golftrolleys. USD523638S offenbart ein Rad mit einer einzigen Speiche.

US5222596 beschreibt einen Golfschlägerhalter, der innerhalb des offenen Endes einer Golftasche durch einen Riemen befestigt werden kann sodass verhindert wird, dass der Halter und die Golftasche auseinanderfallen.

Hiervon ausgehend liegt der Erfindung die Aufgabe zugrunde, ein gattungsgemäßes Fahrzeug so zu verbessern, dass die Applikation schnell und einfach mit der Antriebseinheit verbunden werden kann und die Ausrichtung der beiden Teile vereinfacht wird. Insbesondere soll das Fahrzeug im Golfsport Verwendung finden können.

Zur Problemlösung zeichnet sich ein gattungsgemäßes Fahrzeug dadurch aus, dass mittig am Achsrohr ein Horn ausgebildet ist, das bezogen auf eine Aufstandsfläche der Räder (Fahrbahn) nach oben weist, und das mindestens einen in Richtung eines der Antriebsräder weisenden Zapfen, mindestens eine das Achsrohr zumindest teilweise umgebende erste Stützfläche und mindestens eine zwischen dem Achsrohr und dem Längsträger angeordnete zweite Stützfläche aufweist, mittels derer die Applikation form- und kraftschlüssig mit der Antriebseinheit verbindbar ist.

Durch diese Ausgestaltung kann die Applikation einfach auf das Horn aufgesetzt werden und durch die form- und kraftschlüssige Verbindung innerhalb des Bodens der Applikation und des Horns nimmt die Applikation gegenüber der Antriebseinheit grundsätzlich eine fest definierte Position ein, so dass das manuelle Ausrichten der beiden Baueinheiten zueinander entfällt. Die Endlage der Applikation gegenüber der Antriebseinheit ergibt sich quasi von selbst, weil die Mittel Führungseigenschaften haben und die Applikation, wenn sie auf das Horn gesetzt wird, keine andere Möglichkeit hat, als sich in die endgültige Lage zu bewegen, in der sie dann gegenüber der Antriebseinheit verrastet bzw. verriegelt wird.

Vorzugsweise sind zwei einander gegenüberliegende Zapfen vorgesehen, die jeweils zu einem der Antriebsräder weisen und/oder es sind erste Stützflächen und/oder zweite Stützflächen vorgesehen. Insbesondere vorzugsweise ist der mindestens eine Zapfen (15.1) als Hohlwelle oder mit einer bogenförmigen Umfangsfläche und in Richtung der Aufstandsfläche der Räder (10, 11, 12) offen ausgestaltet. In dem dadurch geschaffenen Freiraum können Kabel zur Verbindung der Antriebsmotoren mit einem Akku oder dergleichen von außen möglichst unsichtbar verlegt werden, was die Optik des Fahrzeugs verbessert.

Vorzugsweise weist die Applikation in ihrem Bodenteil eine zur Form des Horns kongruente Ausnehmung auf.

Wenn die Applikation in ihrem Bodenteil mindestens einen federbelasteten Riegel aufweist, ist die Verriegelung mit der Antriebseinheit und das Lösen einfach möglich. Hierzu kann der Riegel vorzugsweise schwenkbar angeordnet sein und insbesondere vorzugsweise mit dem mindestens einen Zapfen zusammenwirken.

Die Handhabung wird vereinfacht, wenn die Applikation einen Zughebel aufweist, über den eine Schwenkbewegung des mindestens einen Riegels einleitbar ist. Durch Ziehen an dem Zughebel, wird der Riegel dann vom Zapfen weg geschwenkt, so dass die Applikation von dem Horn abgenommen werden kann. Durch die Federbelastung und einer entsprechenden Formgebung des Riegels verschwenkt dieser selbsttätig beim Aufsetzen der Applikation auf das Horn in die geöffnete Stellung und schwenkt zurück, wenn die Applikation ihre Endlage erreicht hat, so dass die Verriegelung dann erfolgt.

An der Applikation kann ein Hebel befestigt sein, der die für die Steuerung der Antriebsmotoren notwendigen Bedienelemente umfasst. Die Steuerung kann drahtgebunden oder kabellos erfolgen. Vorzugsweise ist der Hebel schwenkbar befestigt.

Das Horn kann einen Flansch aufweisen, an dem der Längsträger lösbar befestigbar ist. Durch diese Ausgestaltung ist es möglich, den Längsträger von dem Achsrohr zu trennen und das Fahrzeug zu zerlegen, um es leichter verstauen bzw. transportieren zu können. Die Verbindung zwischen dem Achsrohr und dem Längsträger kann aber auch fest sein.

Vorzugsweise weist der Längsträger eine Ausnehmung auf, in den ein Akkumulator eingelegt werden kann, der die Antriebsmotoren mit Energie speist.

Wenn in der Ausnehmung ein Anschluss vorgesehen ist, mit dem der Akkumulator über einen an ihm ausgebildeten Gegenanschluss zur elektrischen Verbindung mit den Antriebsmotoren mechanisch koppelbar ist, und insbesondere wenn der Anschluss einen Magnet aufweist, über den die mechanische Verbindung von Anschluss und Gegenanschluss herstellbar ist, lässt sich der Akkumulator schnell und einfach anschließen. Der Magnet zieht den Akkumulator an, so dass die mechanische Verbindung nahezu selbsttätig erfolgt. Der Akkumulator kann von dem Bediener des Fahrzeugs sozusagen blind in die Ausnehmung eingeführt werden und Anschluss und Gegenanschluss finden sich von selbst, so dass das sonst übliche Suchen nach dem richtigen Sitz entfällt.

Die Antriebsräder, vorzugsweise alle drei Räder, bestehen zumindest aus einem Radkranz und einer einzigen Speiche. Dadurch kann Gewicht eingespart werden. Radkranz und Speiche können aus einem Stück gefertigt werden und beispielsweise aus Carbon bestehen. Auf den Radkranz kann ein Radring als Reifen aufgesetzt werden, über den die Traktion mit dem Untergrund verbessert wird.

Wenn sich der Innendurchmesser des Radkranzes von axial innen nach axial außen stetig vergrößert, dann wird Schmutz, der sich auf der Innenseite des Radkranzes absetzt bei der Drehbewegung der Räder infolge der Fliehkraft nach außen weggeschleudert, so dass Verkrustungen durch später angetrocknete Erde bzw. Lehm, wie sie üblicherweise auf Golfplätzen vorzufinden sind, vermieden werden.

Die Applikationen können vielfältig sein. Das Fahrzeug kann als selbstfahrender Rollator für gehbehinderte Menschen verwendet werden. Wenn die Applikation eine Sitzeinheit ist, kann die Antriebseinheit für einen leichten Rollstuhl verwendet werden. Ebenso denkbar ist es, die Applikation als Sitz für Kinder oder eine Tragetasche für Babys auszugestalten, so dass das Fahrzeug als Kinderwagen oder Karre betrieben werden kann. Vorzugsweise wird als Applikation natürlich eine Golftasche verwendet werden. In diesem Fall ist es dann vorteilhaft, wenn die Golftasche mehrteilig ausgebildet ist und einen Bodenteil und eine Hülle aufweist, die fest miteinander verbunden sind.

Wenn die Hülle an ihren dem Bodenteil zugewandten Ende diametral angeordnete, in Umfangsrichtung verlaufende Schlitze und in Längsrichtung hierzu beabstandete und diametral in Umfangsrichtung betrachtet nebeneinander angeordnete Klemmelemente aufweist, können die Schäfte der Golfschläger in die Klemmelemente eingeklemmt und die Köpfe der Golfschläger über die Schlitze in das Bodenteil und somit in den Boden der Golftasche eingelegt werden. Dadurch wird der Schwerpunkt der Golftasche und letztendlich natürlich auch der Schwerpunkt des Fahrzeugs, wenn die Golftasche mit der Antriebseinheit verbunden ist, nach weiter unten gelegt. Dadurch ist es möglich, auch steilere Strecken zu bewältigen, ohne befürchten zu müssen, dass das Fahrzeug umstürzt bzw. ohne dass der Bediener entsprechend hohe Haltekräfte aufbringen muss, um dem Umkippen entgegen zu wirken.

Wenn das Bodenteil in den Bereich der Schlitze eine Mehrzahl von Gefachen zur Aufnahme der Golfschlägerköpfe aufweist, sind die Schlägerköpfe zueinander separiert. Sie können nicht aneinander anschlagen, sondern stützte sich an den Wänden der Gefache ab. Klappergeräusche in unwegbarem Gelände werden dadurch sicher vermieden. Außerdem kann eine Beschädigung der Schlägerköpfe ausgeschlossen werden. Vorteilhaft ist es, wenn die Gefachwandungen die Schlägerköpfe möglichst eng bzw. dicht umschließen.

Anhand einer Zeichnung soll nachfolgend ein Ausführungsbeispiel der Erfindung näher beschrieben werden. Es zeigen:
- Figur 1 -: ein erfindungsgemäßes Fahrzeug, bei dem die Antriebseinheit ein Golftrolley und die Applikation eine Golftasche ist;

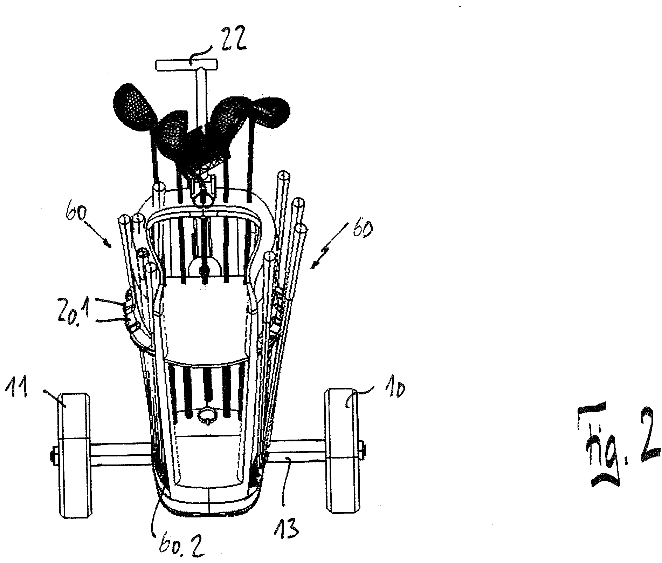

- Figur 2 -: die Rückansicht des Fahrzeugs nach Figur 1 mit teilweise aufgebrochener Golftasche;

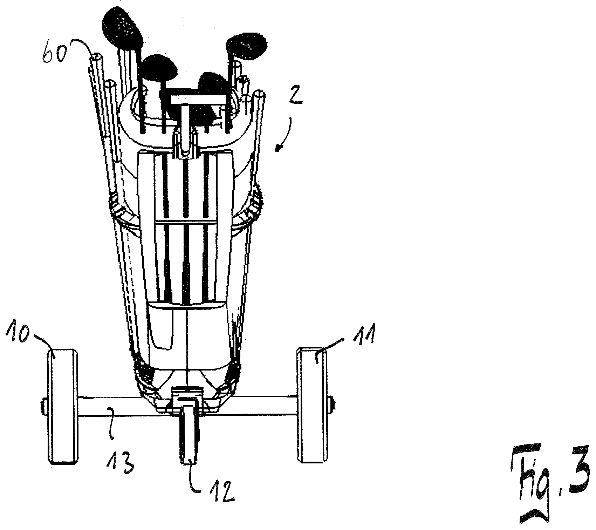

- Figur 3 -: die Vorderansicht des Fahrzeugs nach Figur 1 mit teilweise aufgebrochener Golftasche;
- Figur 4 -: die Golftasche in perspektivischer Darstellung;

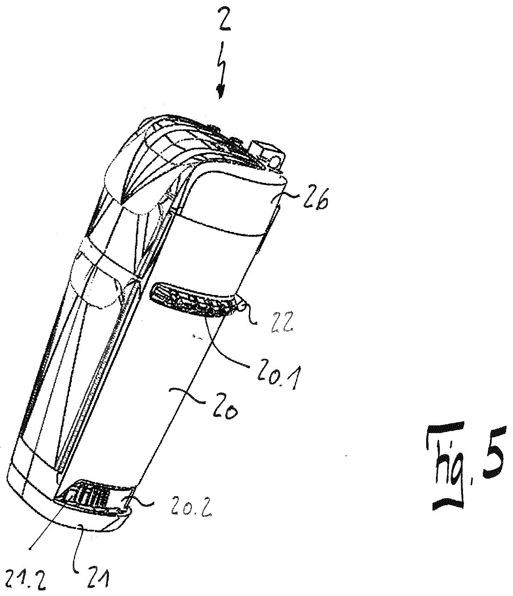

- Figur 5 -: eine weitere perspektivische Darstellung der Golftasche;
- Figur 5a -: eine schematische Darstellung des Verrigelungsmechanismus;
- Figur 6 -: eine perspektivische Darstellung der Antriebseinheit;
- Figur 7 -: eine weitere perspektivische Darstellung der Antriebseinheit;
- Figur 8 -: die Darstellung nach Figur 7 mit gelöstem Akkumulator;
- Figur 9 -: die Darstellung nach Figur 6 mit gelöstem Akkumulator;^
- Figur 10 -: eine Seitenansicht der Antriebseinheit;
- Figur 11 -: die Darstellung nach Figur 10 mit teilweise aufgebrochenen Bauteilen;
- Figur 11a -: eine vergrößerte Darstellung aus Fig. 11;

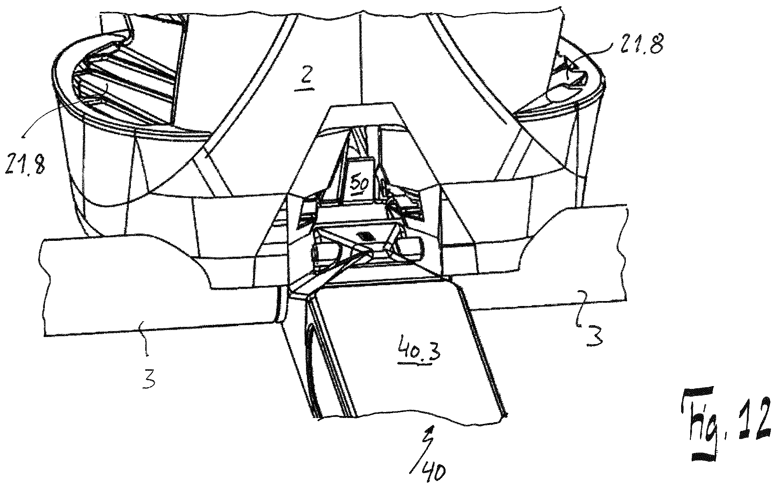

- Figur 12 -: eine Teildarstellung aus Figur 1 in vergrößertem Maßstab;
- Figur 13 -: die Darstellung nach Figur 12 mit von der Antriebseinheit gelöster Applikation;

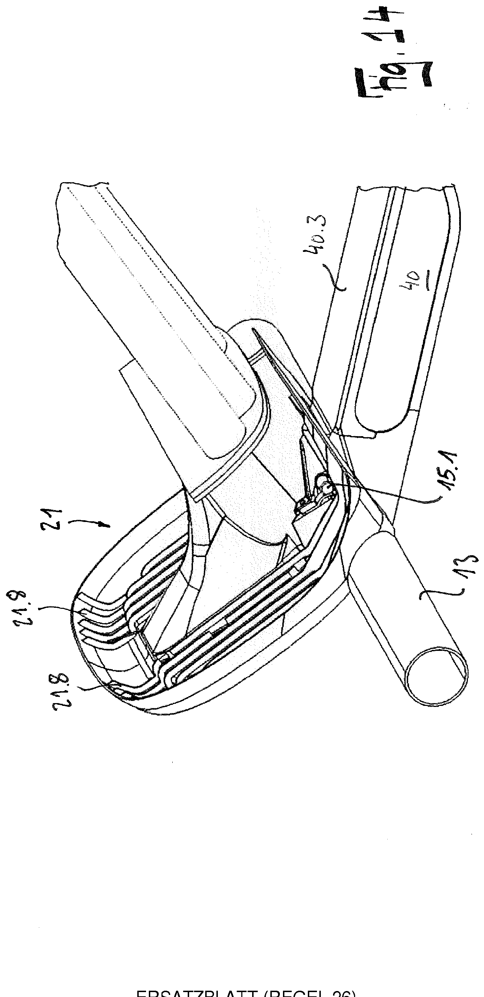

- Figur 14 -: eine perspektivische Teildarstellung aus Figur 1 mit Sicht auf das geöffnete Bodenteil;
- Figur 15 -: die Darstellung nach Figur 14 aus einer anderen Perspektive;
- Figur 15a -: die schematische Darstellung des Entsperrmechanismus für die Applikation;
- Figur 15b -: die Ansicht des Entsperrmechanismus von oben;
- Figur 15c -: den Entsperrmechanismus in Schnittdarstellung;
- Figur 16 -: eine weiter vergrößerte Darstellung im Bereich des Horns;
- Figur 16a -: eine Einzelheit der Antriebseinheit;
- Figur 16b -: die Darstellung nach Figur 16a mit Schattierungen;
- Figur 16c -: die Darstellung gemäß Sichtpfeil XVIc nach Figur 16a;
- Figur 16d -: die Darstellung nach Figur 16c mit Schattierungen;
- Figur 16e -: die Darstellung nach Figur 16c mit einer Variante des Zapfens 15.1;
- Figur 16f -: die Darstellung nach Figur 16e mit Schattierungen;

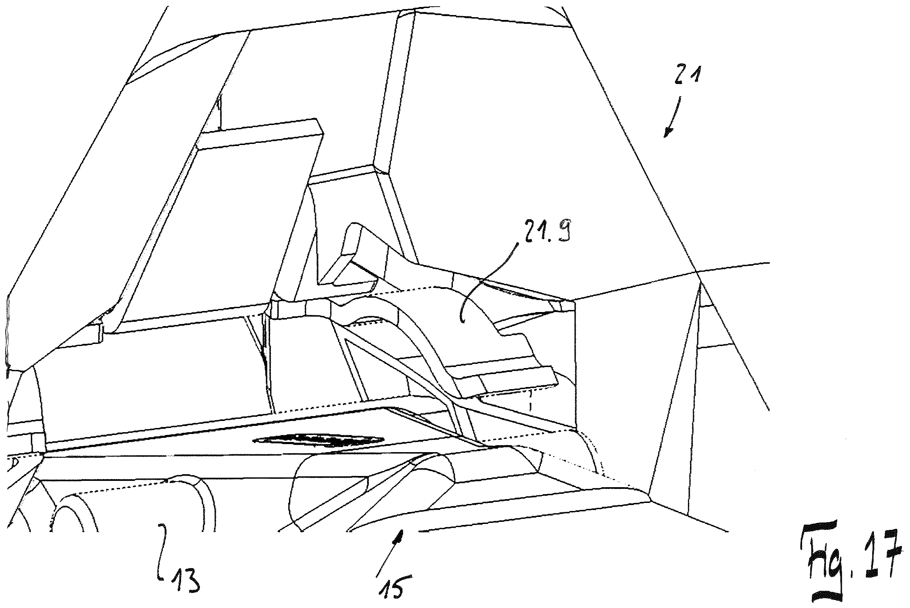

- Figur 17 -: eine Einzelheit;
- Figur 18 -: die Antriebseinheit ohne Nachlaufrad;

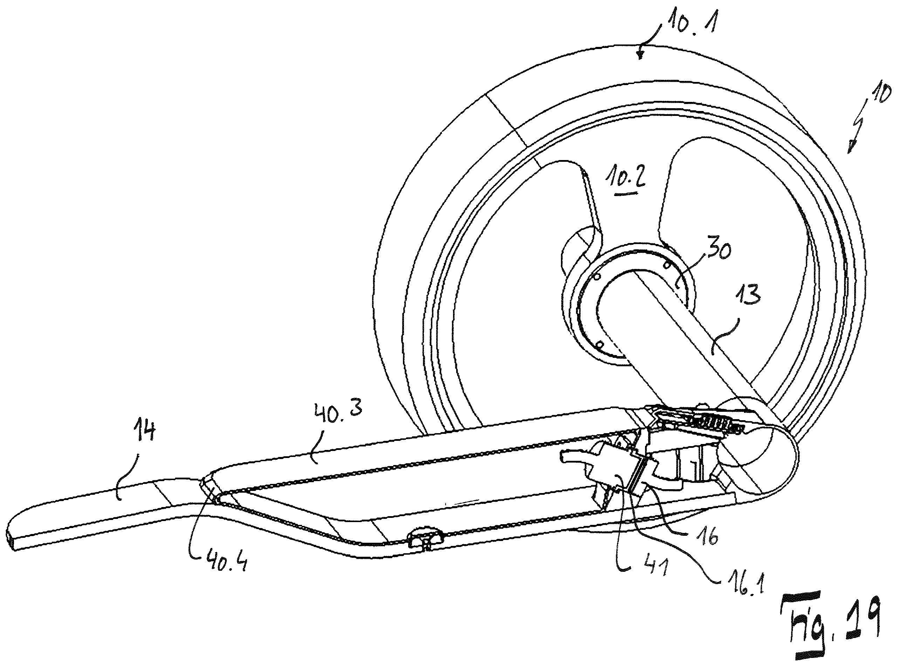

- Figur 19 -: eine Teildarstellung der Antriebseinheit mit aufgebrochenen Akkumulator;
- Figur 20 -: den Achsträger der Antriebseinheit in Teildarstellung;
- Figur 21 -: die Anordnung eines Rades am Achsrohr;
- Figur 22 -: eine vergrößerte Darstellung aus Figur. 21;
- Figur 23 -: eine Einzelheit einer Golftasche in Schnittdarstellung;
- Figur 24 -: eine weitere Einzelheit einer Golftasche in Schnittdarstellung;
- Figur 25 -: eine weitere Einzelheit einer Golftasche in Schnittdarstellung

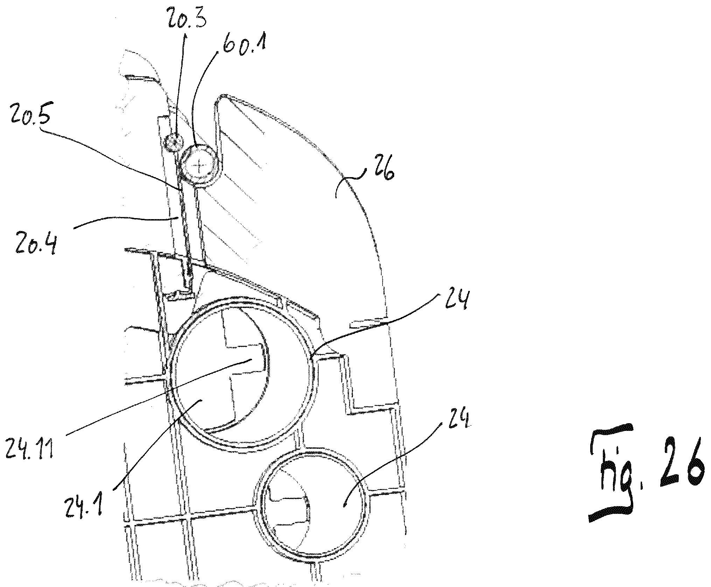

- Figur 26 -: eine weitere Einzelheit einer Golftasche in Schnittdarstellung;
- Figur 27 -: die Befestigung eines Golfschlägerschafts in dem Klemmelement;
- Figur 28 -: die Draufsicht auf eine auf einen Golftrolley aufgesetzte Golftasche.

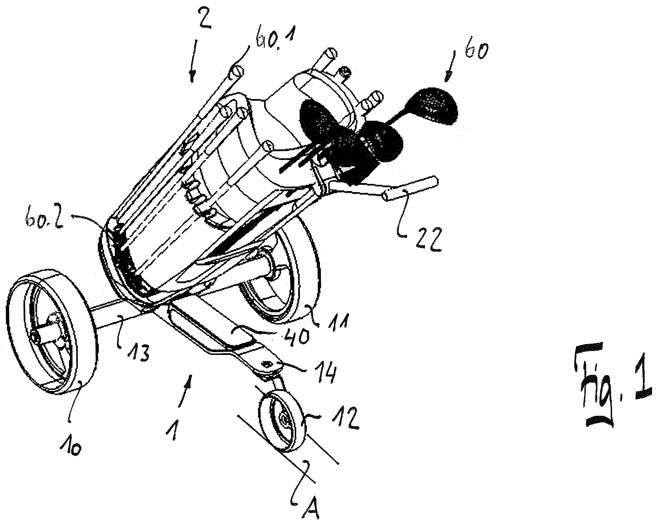

Figur 1 zeigt die perspektivische Darstellung eines erfindungsgemäßen Fahrzeugs, das im Golfsport verwendet wird. Die Antriebseinheit 1 ist der Golftrolley und die Applikation 2 die Golftasche, die eine Mehrzahl von Golfschlägern 40 und sonstige auf einer Golfrunde vom Spieler benötigte Utensilien aufnimmt.

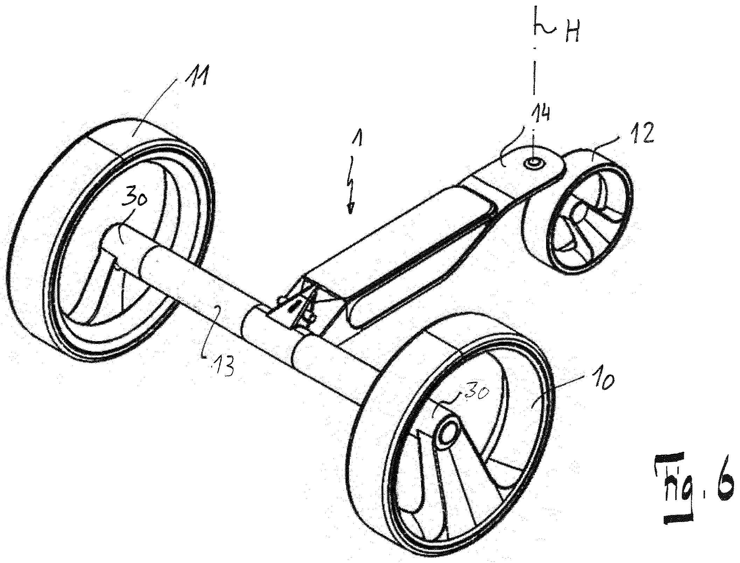

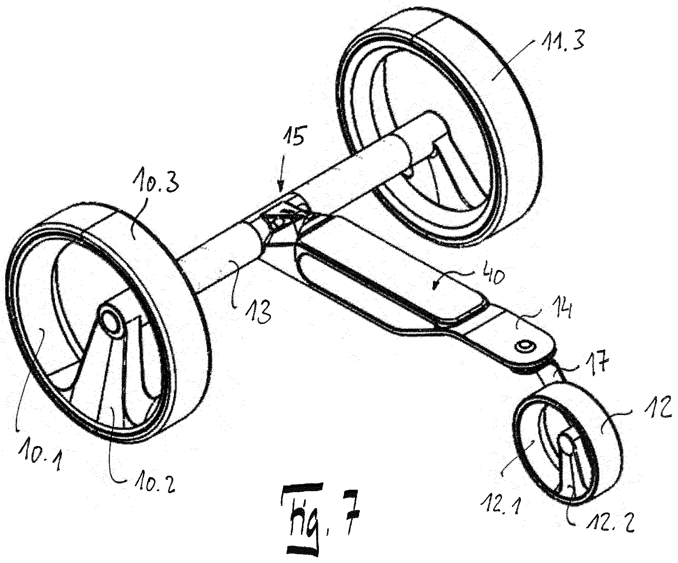

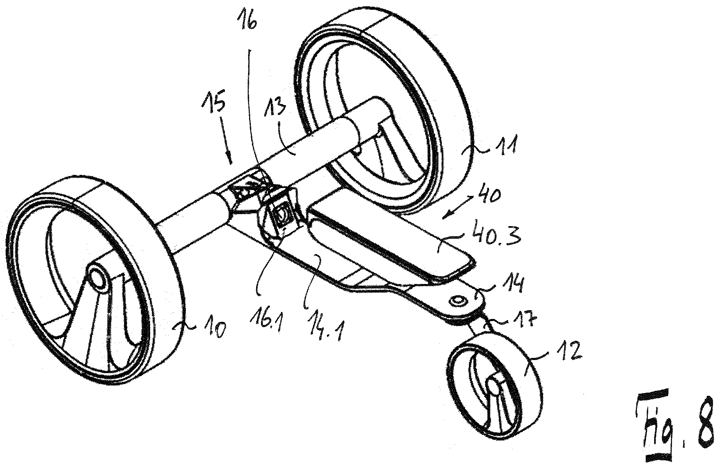

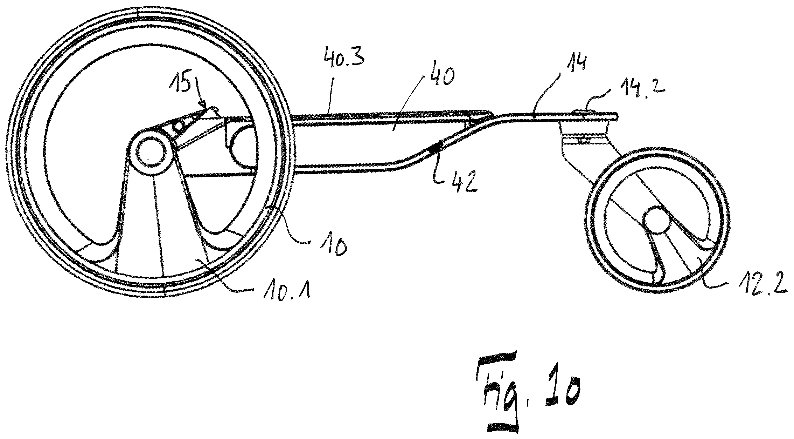

Die in den Figuren 6 bis 11 dargestellte Antriebseinheit 1 besteht im Wesentlichen aus den beiden an den gegenüberliegenden Enden des Achsrohres 13 angebrachten

Antriebsrädern 10, 11, die über nicht detaillierter dargestellte Elektromotoren 30 angetrieben werden, und dem mittig mit dem Achsrohr 13 verbundenen Längsträger 14, der an seinem freien Ende das hintere Nachlaufrad 12 trägt, das um die Hochachse H verdrehbar gelagert ist. Im normalen Betrieb des Fahrzeuges 1 (Vorwärtsfahrt) sind die Antriebsräder 10,11 vorne. Im Längsträger 14 ist eine Ausnehmung 14.1 ausgebildet, in der ein Akkumulator 40 einsetzbar ist, der über den Haltemagnet 42 in der Ausnehmung 14.1 fixiert wird. Im Übergang vom Achsrohr 13 zum Längsträger 14 ist mittig am Achsrohr 13 ein bezogen auf die Aufstandsfläche A der Räder 10, 11, 12 nach oben weisendes Horn 15 vorgesehen, das sich auch in Richtung des Längsträger 14 erstreckt. Das Horn 15 kann integraler Bestandteil des Längsträgers 14 sein. Ebenso ist es denkbar, dass der Längsträger 14 am Horn 15 lösbar befestigt ist und das Horn15 hierzu einen Flansch 15.4 aufweist.

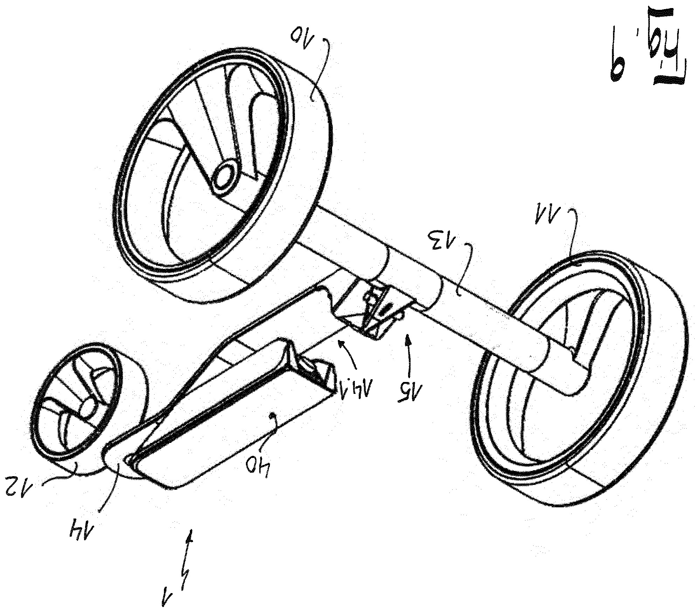

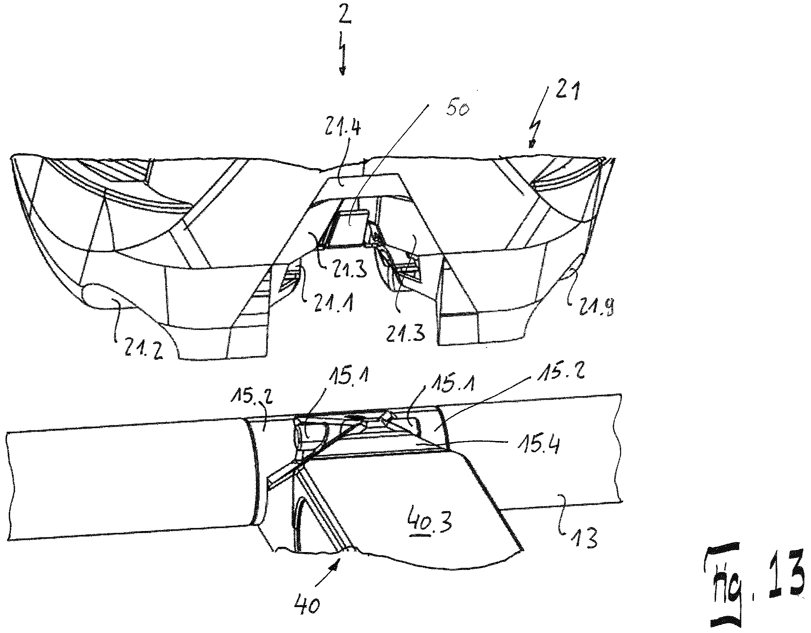

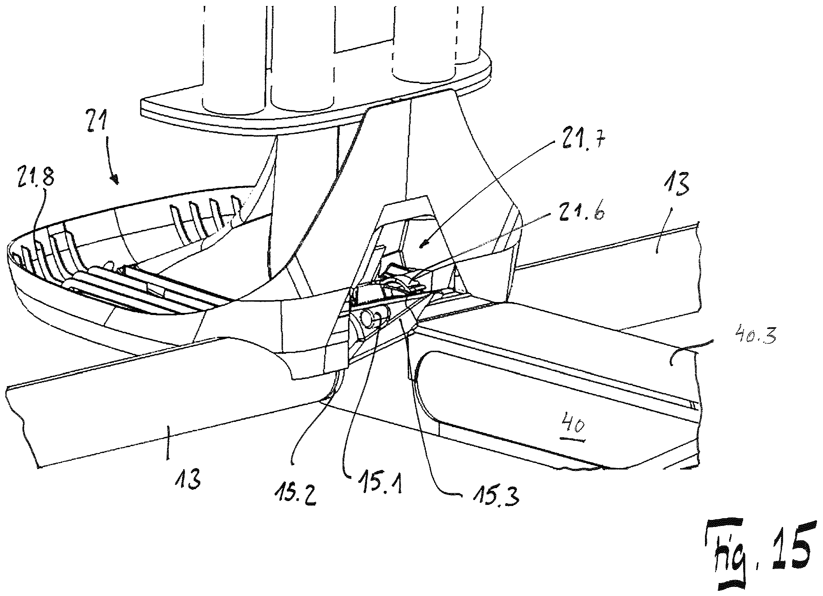

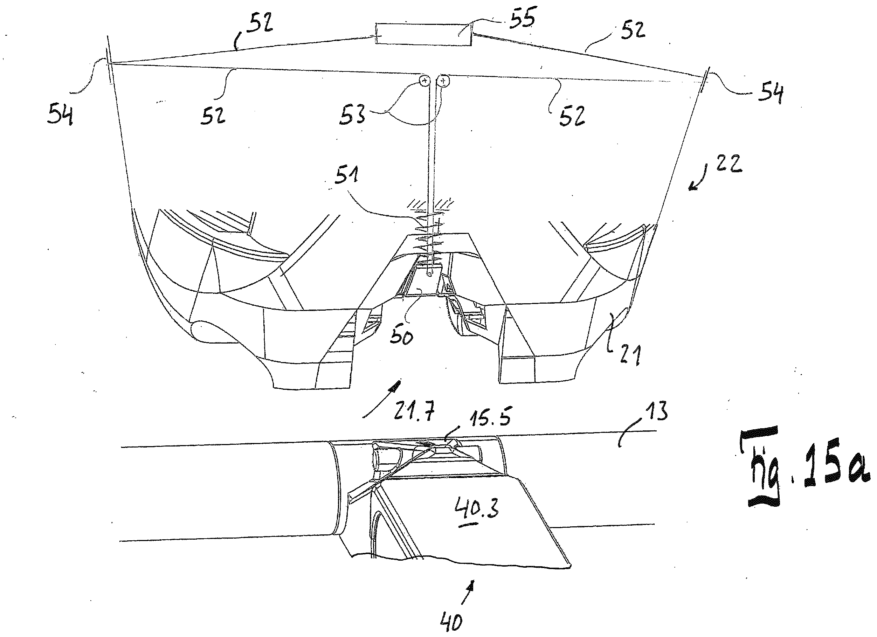

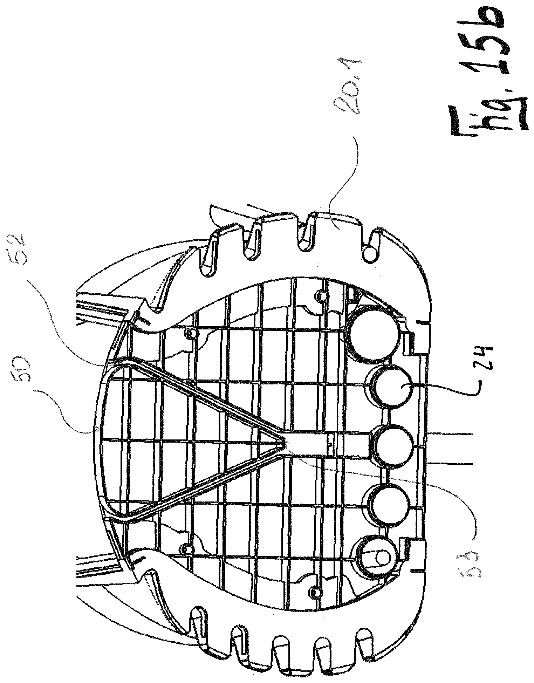

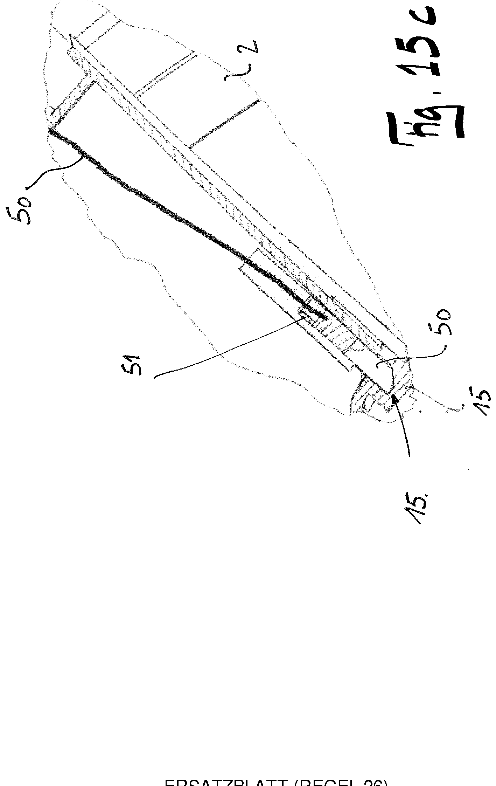

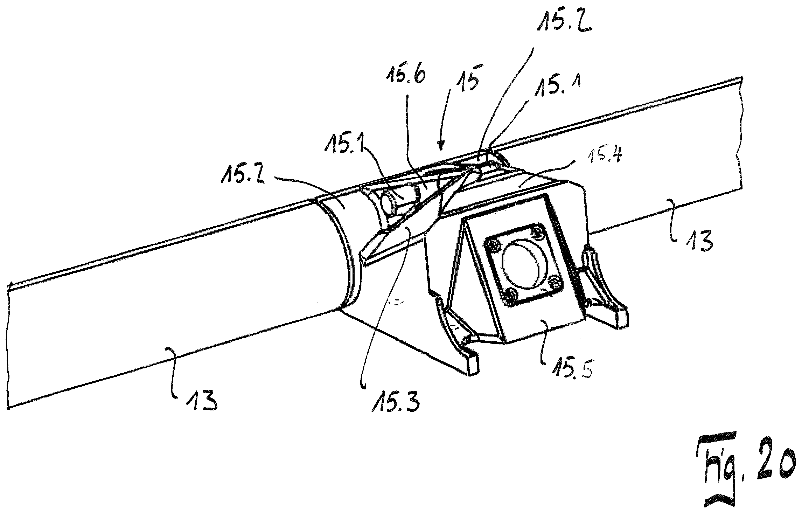

Wie aus Figuren 9 und 20 hervorgeht, weist das Horn 15 zwei in Richtung der Räder 10, 11 weisende Zapfen 15.1 und paarweise angeordnete Stützflächen 15.2 und 15.3 auf. Das Bodenteil 21 der Applikation 2 ist mit zu den Zapfen 15.1 korrespondierenden Ausnehmungen 21.1, zu den Stützflächen 15.2 korrespondierenden Stützflächen 21.2 und zu den Stützflächen 15.3 korrespondierenden Stützflächen 21.3 versehen. Wie Figur 13 erkennen lässt, sind die Stützflächen 21.9 den Rundungen der Stützflächen 15.2, die auch Zentrierflächen ausbilden, am Achsrohr 13 entsprechend angepasst und die Stützflächen 21.3 sind so plan wie die Stützflächen 15.3 (vergleiche Figur 20). An der dritten Stützfläche 15.4 am Horn 15 kann die Stützfläche 21.4 am Bodenteil 21 anliegen, wenn die Applikation 2 mit der Antriebseinheit 1 verbunden ist. Zum Verbinden von Antriebseinheit 1 und Applikation 2 wird letztere mit ihrer zur Form des Horns 15 kongruenten Ausnehmung 21.7 auf das Horn 15 aufgesetzt, so dass die gerundeten Stützflächen 21.9 zur Auflage auf den gerundeten Stützflächen 15.2 gelangen. Die Zapfen 15.1 am Horn 15 greifen dann in die Ausnehmungen 21.1 im Bodenteil 21 ein. Der Bediener kann die Applikation 2 anschließend in Richtung des Längsträgers 14 verschwenken, bis die Stützflächen 21.3 zur Anlage an den Stützflächen 15.3 und die Stützfläche 21.4 zur Anlage an der Stützfläche 15.4 gelangen. Die Verriegelung zwischen der Applikation 2 und der Antriebseinheit 1 erfolgt dann über mindestens einen Riegel 21.6 oder einen Sperrschieber 50 (vergleiche Figuren 13, 15). Der Sperrschieber 50 und die entsprechende Rastnut 15.5 am oder im Horn 15 sind so ausgebildet, dass die Verriegelung selbsttätig erfolgt und der Sperrschieber 50 durch die schrägen Flächen am Horn 15 gegen die Kraft der Druckfeder 51 angehoben wird (vgl. Figur 15a) und beim Erreichen der Rastnut 15.5 von der Druckfeder 51 in diese hineingedrückt wird. Solche Verriegelungsmechanismen sind üblich und werden in verschiedenen Anwendungen eingesetzt. Um die Applikation 2 vom Horn 15 abnehmen zu können, wird der Sperrschieber 50 über zwei Zugbänder 52 gegen die Kraft der Druckfeder 51 angehoben. Hierzu sind die beiden Zugbänder 52 über zwei Umlenkungsrollen 53 und zwei Zugbandführungen 54 innerhalb der fest mit dem Bodenteil 21 verbundenen Hülle 20 geführt und wie nachfolgend noch näher beschrieben werden wird, mit dem Trage- und Entsperrungsgriff 55 verbunden.

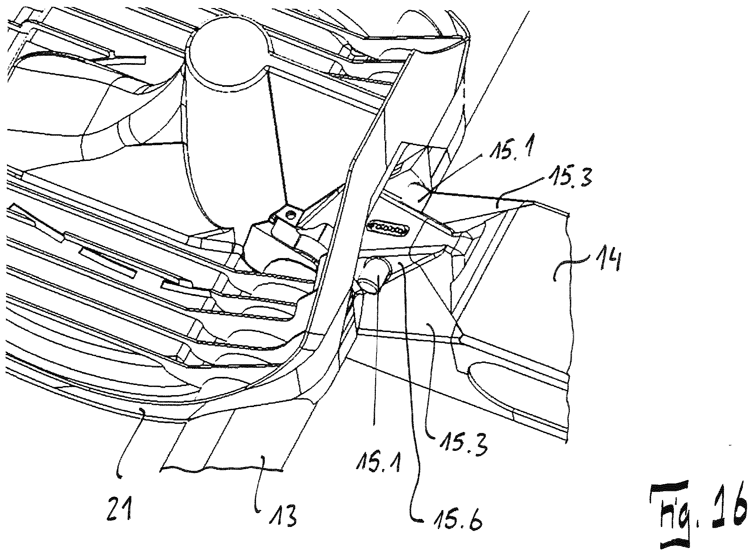

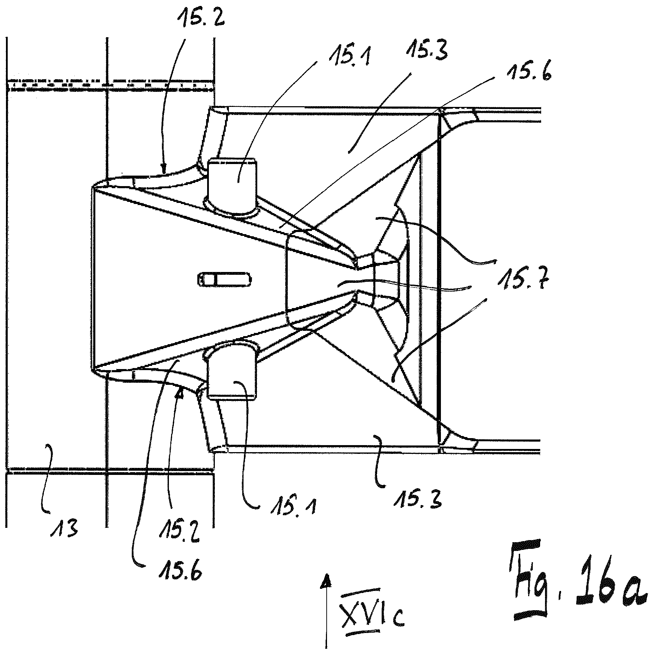

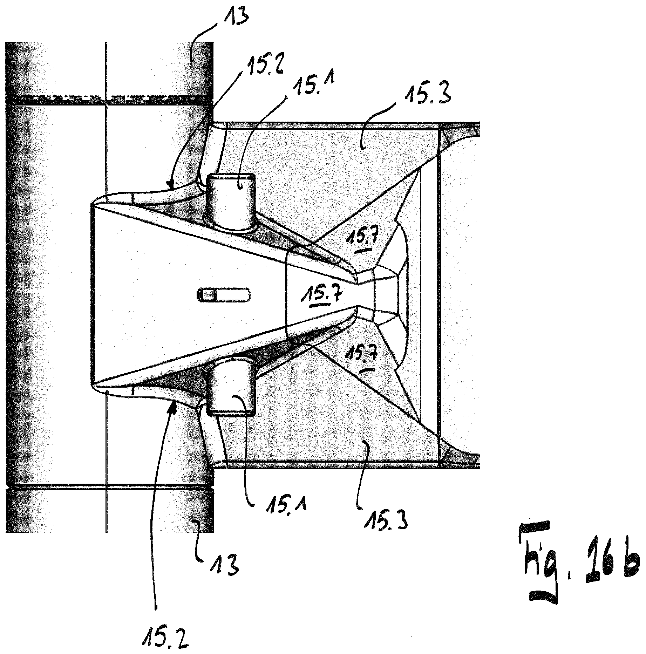

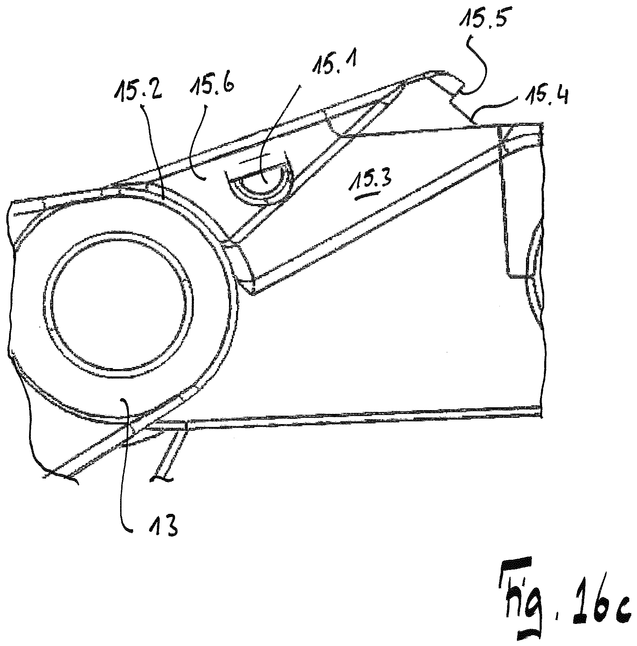

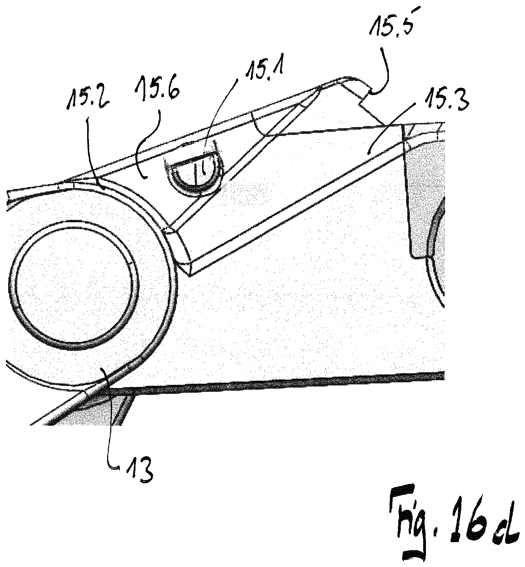

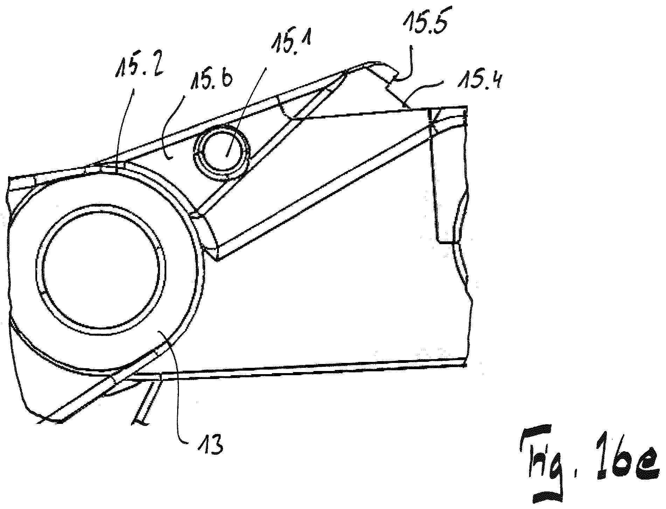

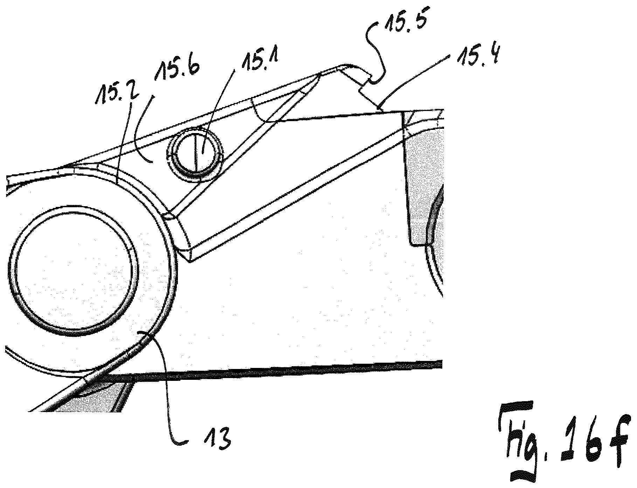

Die Figuren 16a bis 16f lassen die Stützflächen 15.2, 15.3 und die Zentrierflächen 15.6 am Horn gut erkennen. Unter der Abdeckung 15.7 am Horn werden elektronische Komponenten, wie beispielsweise eine Antenne zum Empfang von GPS-Signalen oder Fernbedienungssignalen, untergebracht. Zu diesem Zweck besteht die Abdeckung 15.7 aus Kunststoff. Die Zapfen 15.1 können rund (Figur 16e) oder nach oben abgeflacht (Figur 16c) ausgebildet sein. Wichtig ist die zur Aufstandsfläche der Räder 12 weisende Rundung, die zur Befestigungung der Applikation 2 (hier Golfbag) dient.

Die Räder 10, 11, 12 bestehen aus einem Radkranz 10.1, 11.1, 12.1, der über eine einzige Speiche 10.2, 11.2, 12.2 Kontakt zur Antriebseinheit 1 hat. Die Speichen 10.2, 11.2, 12.2 sind unmittelbar mit den unabhängig voneinander antreibbaren Elektromotoren 30 verbunden. Auf den Radkranz 10.1, 11.1, 12.1 kann ein Radring 10.3, 11.3., 12.3 aufgesetzt sein, der profiliert ist, um eine ausreichende Traktion der Räder 10, 11, 12 auf dem Untergrund A zu gewährleisten. Der Innendurchmesser Dᵢ der Räder 10, 11, 12 nimmt von axial innen nach axial außen stetig zu. Der äußere Innendurchmesser Dᵢ ist also größer als der innere Innendurchmesser Dᵢ der Radkränze 10.1, 11.1, 12.1. Dadurch wird sich auf der Innenseite des Radkranzes festsetzender Schmutz durch die Fliehkraft beim Drehen der Räder 10, 11, 12 von diesen weggeschleudert. Verkrustungen durch später antrocknenden Schmutz werden dadurch wirkungsvoll vermieden.

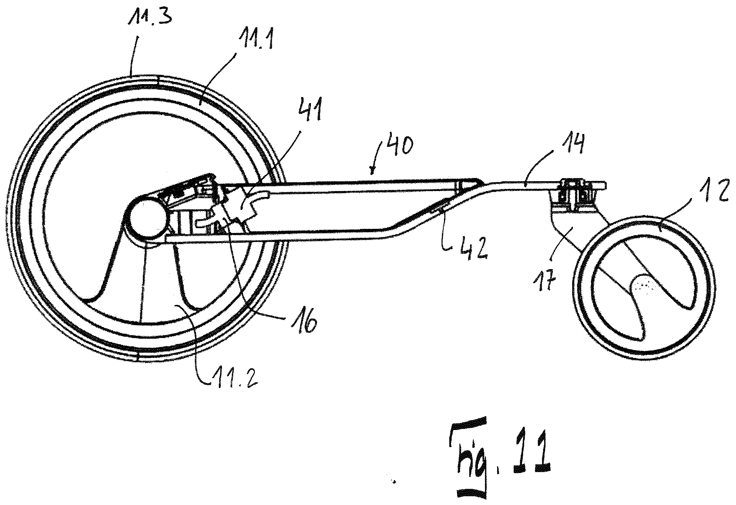

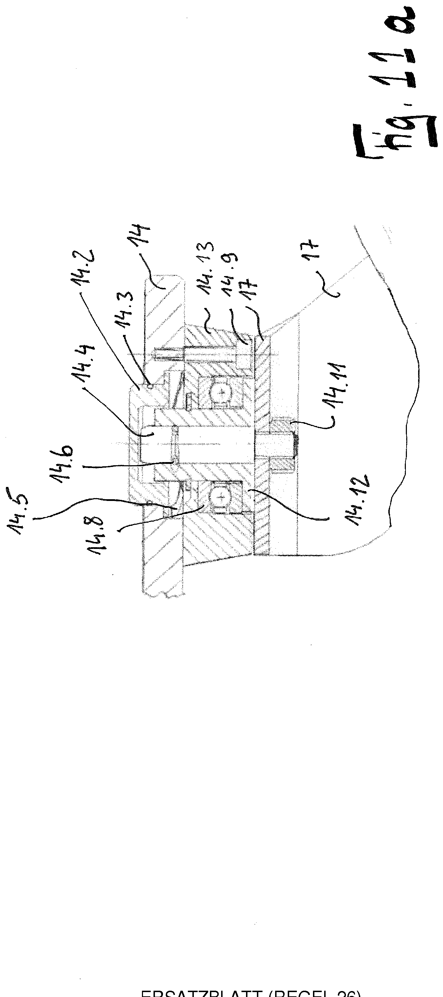

Figur 11a zeigt den Rastmechanismus zur Anordnung des Achsschenkels 17, der das hintere Rad 12 trägt, am Längsträger 14. Im oberen Ende des Achsschenkels 17 ist ein Loch vorgesehen, über das ein Stehbolzen 14.4 über die Stehbolzenmutter 14.11 festgeschraubt ist. Der Stehbolzen 14.4 wird umgeben von einer Rasthülse 14.12, die an ihrem dem Achsschenkel 17 zugewandten Ende einen Flansch ausbildet, auf dem sich ein Wälzlager, insbesondere ein Rillenkugellager 14.8 abstützt. Ein Sockel 14.13 ist über Schrauben 14.9 mit dem Längsträger 14 verschraubt und bildet an seinem dem Längsträger 14 zugewandten Ende einen Flansch aus, an dem sich das Rillenkugellager 14.8 ebenfalls abstützt, so dass der Achsschenkel 17 drehbar gegenüber dem Längsträger 14 gelagert ist. Mittels einer bekannten Kugelrasterung 14.6 ist der Stehbolzen 14.4 in der Rasthülse 14.12 fixiert. Zum Lösen des Achsschenkels 17 vom Längsträger 14 wird der Druckknopf 14.2 gegen die Kraft der Tellerfeder 14.5 gedrückt, wodurch die Kugelrasterung 14.6 gelöst wird und der Achsschenkel 17 vom Längsträger 14 abgenommen werden kann. Um das Eindringen von Schmutz zu verhindern, ist der Druckknopf 14.2 gegenüber dem Längsträger 14 mit einem Dichtring 14.3 abgedichtet.

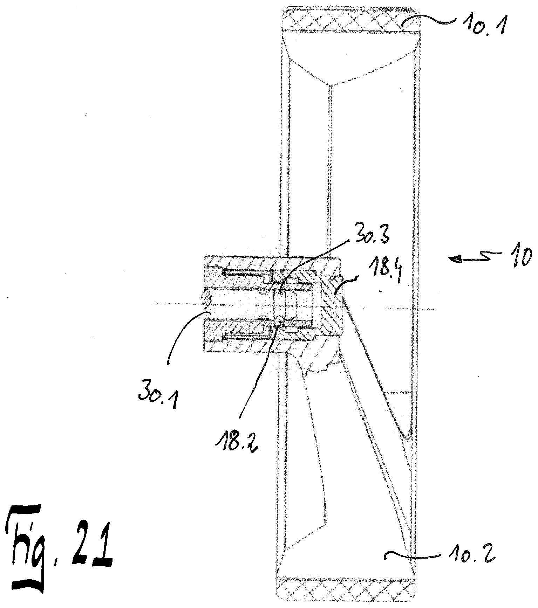

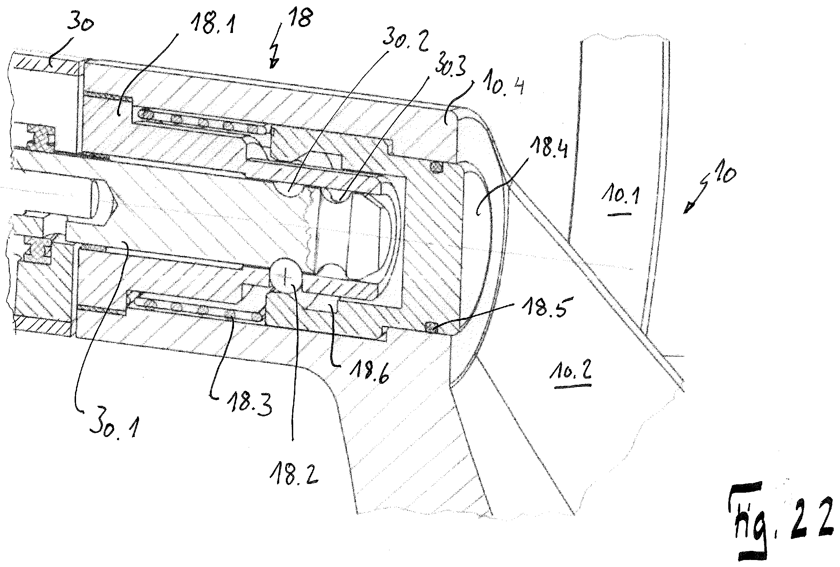

Figuren 21 und 22 zeigen den Verriegelungsmechanismus der Antriebsräder 10.11 am Achsrohr 13. Die Antriebsmotoren 30 sind mit einem Bolzen 30.1 versehen, auf die die Antriebsräder 10, 11 über die Radnabe 10.4 angedockt werden können. Hierzu ist ein bekannter Verriegelungsmechanismus 18 vorgesehen, der aus der Rasthülse 18.1, der Rastkugel 18.2, der Druckfeder 18.3 und dem über einen Dichtring 18.5 gegenüber der Radnabe 10.4 abgedichteten Druckknopf 18.4 besteht. Am äußeren Ende des Rastbolzens 30.1 sind zwei umlaufende Nuten 30.2, 30.3 vorgesehen, die mit der Rastkugel 18.2 zusammenwirken können. In der in Figur 22 gezeigten Darstellung ist das Antriebsrad 10 verriegelt. Die Rastkugel 18.2 sitzt hierzu in der Rastnut 30.2. Wird der Druckknopf 18.4 gegen die Kraft der Druckfeder 18.3 in Richtung des Antriebsmotors 30 gedrückt, gelangt die Rastkugel 18.2 in die Ausnehmung 18.6 im Druckknopf 18.4 und damit außer Eingriff mit der Nut 30.2, so dass das Antriebsrad 10 vom Rastbolzen 30.1 abgenommen werden kann. Figur 21 zeigt die Anordnung der Rastkugel 10.2 in der Freilaufnut 30.3, mit der das Antriebsrad 10 vom Rastbolzen 30.1 und damit vom Antriebsmotor 30 getrennt werden kann, wodurch verhindert wird, dass beispielsweise bei Ausfall des Akkumulators 40 die Antriebsmotoren 30 mitgedreht werden müssen, wenn die Antriebseinheit 1 vom Bediener geschoben werden muss.

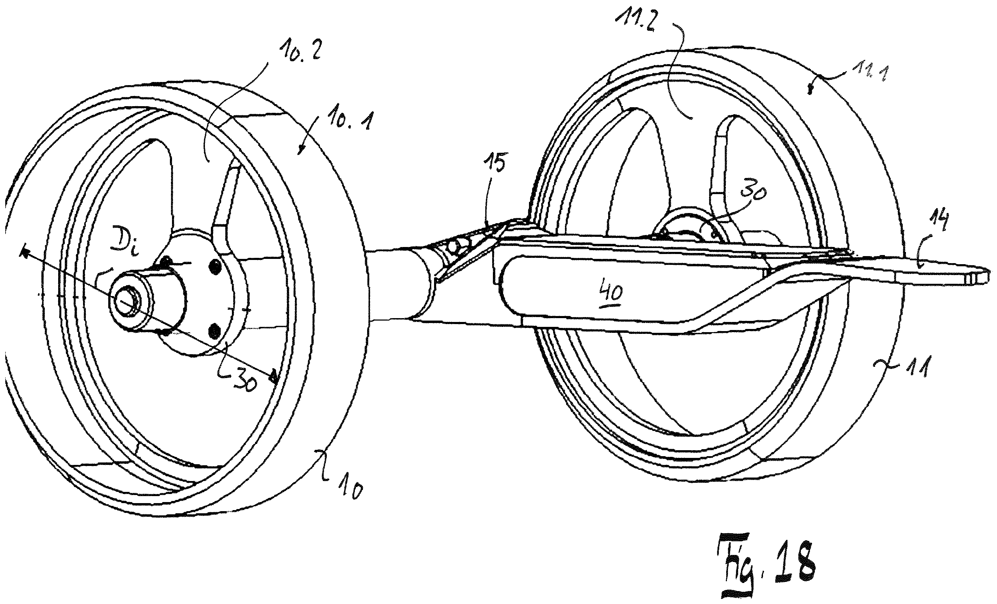

Die Stromversorgung der Elektromotoren 30 erfolgt über den Akkumulator 40, der in seiner äußeren Gestalt an die Ausnehmung 14.1 des Längsträger 40 angepasst ist, so dass in der Seitenansicht Längsträger 14 und Akkumulator 40 eine geschlossene und optisch ansprechende Gestaltungsform bilden (vgl. Figur 18). In der Ausnehmung 14.1 ist ein elektrischer Anschluss 16 vorgesehen, mit dem der Akkumulator 40 über einen an ihm ausgebildeten Gegenanschluss 41 zur Herstellung einer elektrischen Verbindungen mit den Antriebsmotoren 30 mechanisch koppelbar ist. Über den Magnet 16.1 am Anschluss 16 wird der Gegenanschluss 41 und somit der Akkumulator 40 in die Steckverbindung gezogen, so dass das Herstellen der elektrischen Verbindung unterstützt wird und eine "Fummelei" beim Herstellen der Verbindung durch den Bediener vermieden wird. Durch die Anpassung der äußeren Gestaltungsformen des Akkumulators 40 an die Ausnehmung 14.1 im Längsträger 14 sitzt der Akkumulator darin wie angegossen. Dies sieht optisch nicht nur gut aus, sondern unterstützt auch das Einsetzen des Akkumulators 40 sehr wirkungsvoll. Um die Beschaffung und Wartung des Akkumulators 40 zu vereinfachen, kann vorgesehen sein ein Gehäuse der Ausnehmung 14.1 entsprechend zu gestalten, das genau die Form hat, wie sie mit dem Bezugszeichen 40 in den Figuren gekennzeichnet ist und in diesem Gehäuse kann ein handelsüblicher Akkumulator untergebracht werden, dessen Gestaltungsform dann letztendlich unerheblich ist. Dadurch kann dann auf einen Massenartikel zurückgegriffen werden, der relativ preiswert beschafft werden kann, wenn ein Austausch des Akkumulators notwendig werden sollte.

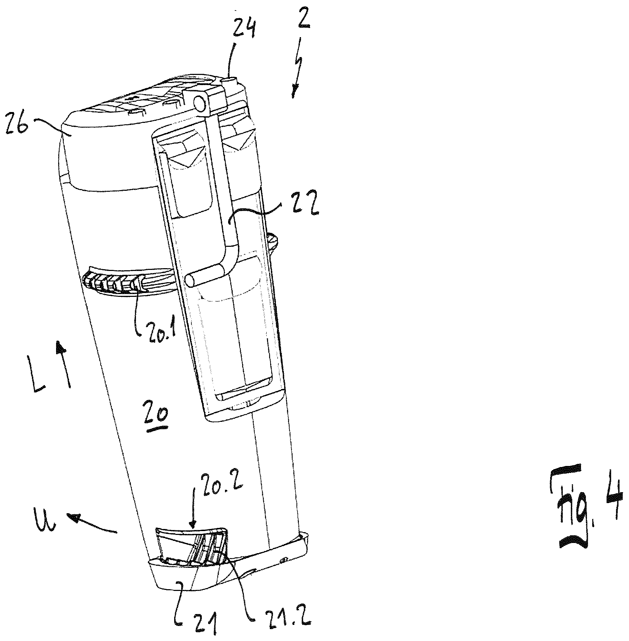

Figur 4 zeigt eine Golftasche als Applikation. Diese besteht aus dem Bodenteil 21 und der fest mit diesem verbundene Hülle 20. In der Hülle 20 sind oberhalb des Bodenteils 21 in Umfangsrichtung U verlaufende diametral gegenüberliegend angeordnete Schlitze 20.2 vorgesehen. Im Bereich des dem Bodenteil 21 gegenüberliegenden Endes der Hülle 20 sind in Längsrichtung L zu den diametral angeordneten Schlitzen 20.2 diametral angeordnete Klemmelemente 20.1 vorgesehen. Im Bodenteil 21 sind eine Mehrzahl nebeneinander angeordneter Gefache 21.2 vorgesehen. Diese Gefache 21.2 nehmen die Schlägerköpfe 40.2 der Golfschläger 40 (Eisen) auf, und über die Klemmelemente 20.1 werden die Schlägergriffe 40.1 an der Golftasche 2 befestigt, so dass sie fest in bzw. von dieser aufgenommen werden. Die Gefache 21.2 verhindern, dass die aus Metall bestehenden Schlägerköpfe 40.2 der Golfschläger 40 aneinander schlagen und Klappergeräusche entstehen bzw. die Schlägerköpfe 40.2 beschädigt werden. Die Umfangswandlungen der Gefache 21.2 umgeben zu diesem Zweck die Schlägerköpfe 40.2 vorzugsweise möglichst dicht bzw. eng, damit diese in ihrer Bewegungsmöglichkeit gehemmt bzw. eingeschränkt werden. Da die Golfschläger 40 so von außen leicht greifbar sind, wird ihre Handhabung beim Golfspiel vereinfacht.

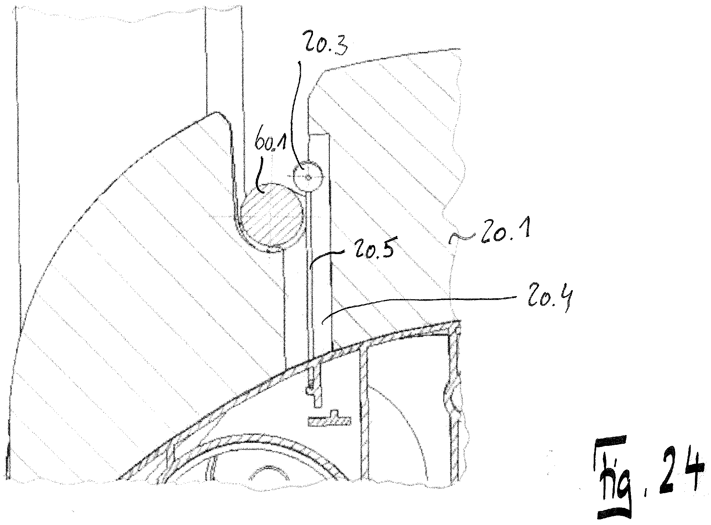

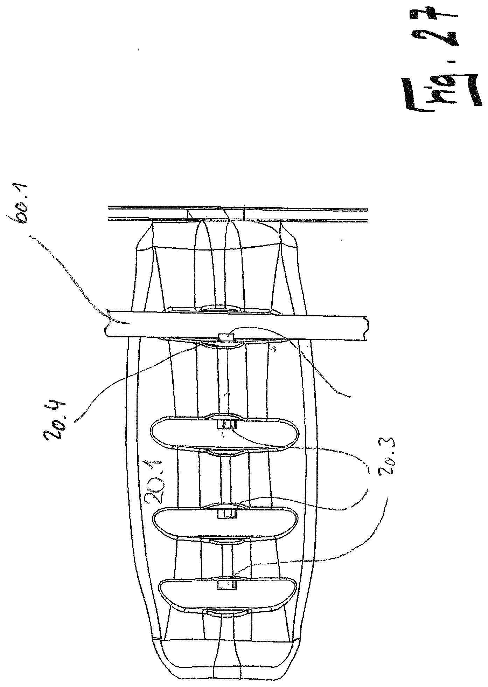

Figur 27 zeigt wie ein Schlägergriff 40.1 in einem Klemmelement 20.1 aufgenommen ist. Das Klemmelement 20.1 ist mit einer federbelasteten Rolle 20.3 versehen. Wird der Golfschlägergriff 40.1 gegen die Rolle 20.3 gedrückt, verschiebt sich die Rolle 20.3 gegen die Kraft der Feder 20.5 in die Ausnehmung 20.4, so dass der Golfschlägergriff 40.1 in das Klemmelement 20.1 hinein geschoben werden kann. Hat er die Rolle 20.3 passiert, schnappt diese wieder zurück und sichert den Golfschlägergriff 40.1 im Klemmelement 20.1 (vgl. Fig. 24).

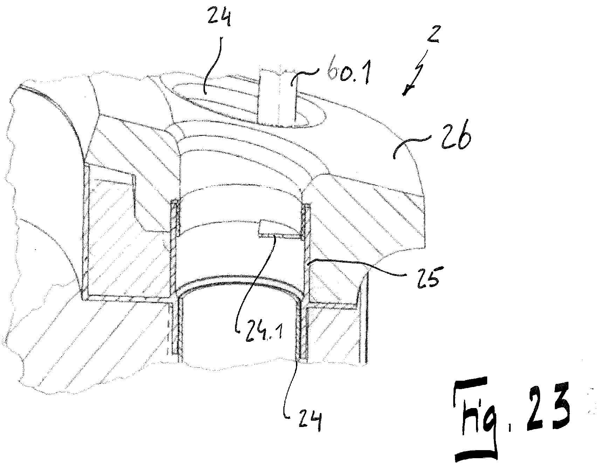

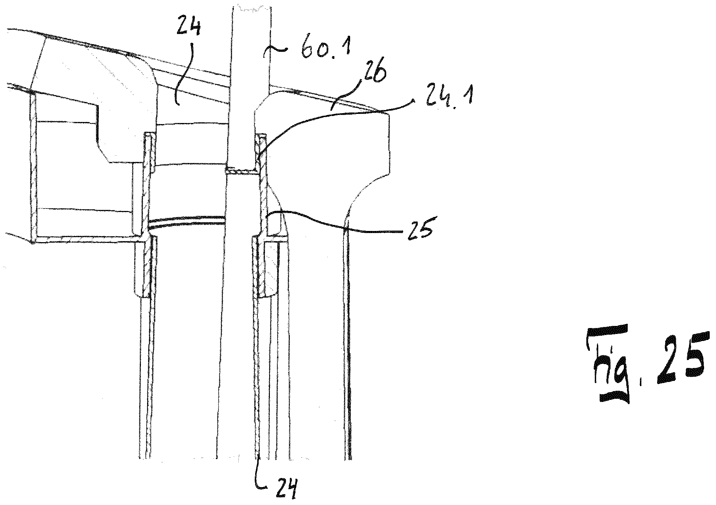

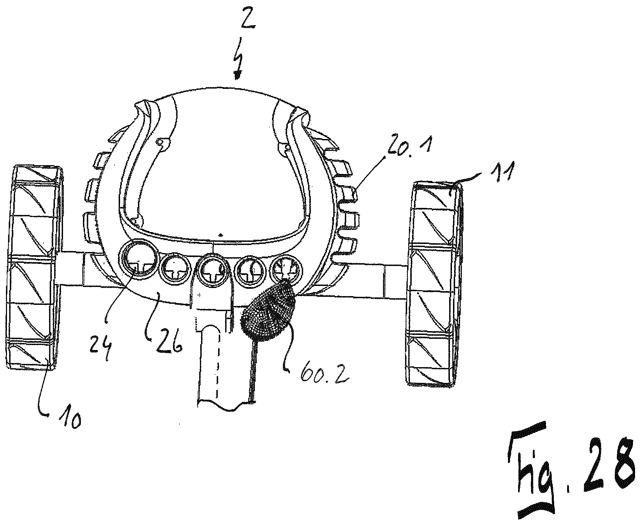

Die Golfschläger 40 (Hölzer) können mit den Griffen 40.1 in die Röhren 24 von oben in die Golftasche eingesetzt werden (siehe Figuren 23, 25 und 28). Um die Golfschlägergriffe 40.1 in den Röhren 24 zu fixieren, ist eine Buchse 24.1 aus einem elastischen Material, beispielsweise Silikon eingesetzt, die die Golfschlägergriffe 40.1 umschließt und in das Strukturteil 25 in dem Oberteil 26 bzw. der Hülle 20 eingesetzt ist.

Außerdem wird in der Golftasche 2 selbst ein großer Innenraum geschaffen, der für die Aufnahme von Utensilien des Spielers genutzt werden kann. Gegenüber herkömmlichen Golftaschen bietet die erfindungsgemäße Tasche wesentlich mehr Platz. Hier können innerhalb des inneren Hülle 20 gebildeten Stauraumes einzelne Fächer vorgesehen sein, in die an den durch sie gebildeten Innenraum angepasste Taschen eingesetzt werden können, die der Spieler nach der Golfrunde entnehmen kann, wenn die Golftasche 2 weggestellt wird. Eine solche Tasche kann beispielsweise eine Kühltasche sein. Auch ist es zum Beispiel möglich, im oberen Bereich der Golftasche 2 ein Fach vorzusehen, in dem eine Regenplane untergebracht ist, die fest mit der Hülle 20 verbunden ist und dann, wenn Regenschutz für die Golftasche 2 gewünscht ist, herausgenommen und einfach über die Hülle 20 herübergestülpt bzw. gezogen wird. Die Regenplane kann der Kontur der Hülle 20 angepasst sein, wobei die aufgenommenen Golfschläger 40 (insbesondere die Hölzer) dabei berücksichtigt werden müssen. Da die Regenplane fest mit der Hülle 20 verbunden ist, kann sie im Spielbetrieb nicht verloren gehen. An dem dem Nachlaufrad 12 zugewandten Bereich der Golftasche 2 ist ein schwenkbarer Hebel 22 angeordnet, an dem die Bedienelemente für die Steuerung der Antriebseinheit 1 angeordnet werden können. Die Verbindung mit der Antriebseinheit kann entweder kabelgebunden und dann über Steckverbindungen oder kabellos erfolgen. Die Golftasche 2 ist damit integraler Bestandteil des Fahrzeugs. Die Antriebseinheit 1 kann dadurch sehr kompakt konstruiert und ausgebildet werden, sodass es nicht zwingend notwendig ist, diese zerlegbar zu gestalten.

Figur 15a zeigt schematisch die Kinematik, die es ermöglicht, die Golftasche 2 von der Antriebseinheit 1 zu entfernen. Die Verriegelung der Golftasche 2 am Horn 15 erfolgt über das Sperrstück 50. Zur Abnahme der Golftasche 2 wird der Trage- und Entsperrungsgriff 55 angezogen und über die beiden Zugbänder 52 wird das Sperrstück 50 dann gegen die Kraft der Druckfeder 51 aus der Verriegelungsnut 15.5 im Horn 15 herausgehoben, sodass die Golftasche 2 vom Horn 15 weggeschenkt und von der Antriebseinheit 1 abgehoben werden kann. Diese Kinematik ist im Inneren der Hülle 20 untergebracht, sodass sie von außen unsichtbar ist.

Die Materialien für die Antriebseinheit 1 und die Hülle 2 sind möglichst leicht gewählt, um eine gute Handhabbarkeit des Fahrzeuges zu gewährleisten. Vorzugsweise bestehen die Räder 10, 11, 12, das Achsrohr 13 und der Längsträger 14 aus Carbon. Das Bodenteil 21 und das Oberteil 26 bestehen aus einem schlagfesten Kunststoff. Um eine möglichst hohe Stabilität zu gewährleisten, sind zumindest in dem Bodenteil 21 eine Mehrzahl von Rippen 21.8 vorgesehen. Die Hülle 20 an sich kann aus einem Gewebematerial aufgebaut sein. Das Gehäuse für den Akkumulator 40 kann aus einem Kunststoffspritzteil bestehen oder ebenfalls aus Carbon. Die Radringe 10.3, 11.3., 12.3 sind aus möglichst dünnem Material gefertigt.

**Bezugszeichenliste**

| | | | |
|---|---|---|---|
| 1 | Antriebseinheit | 18 | Verriegelungsmechanismus |
| 2 | Applikation | 18.1 | Rasthülse |
| | | 18.2 | Rastkugel |
| 10 | Antriebsräder | 18.3 | Druckfeder |
| 10.1 | Radkranz | 18.4 | Druckknopf |
| 10.2 | Speiche | 18.5 | Dichtring |
| 10.3 | Radring | | |
| 10.4 | Radnabe | 20 | Hülle |
| | | 20.1 | Klemmelement |
| 11 | Antriebsräder | 20.2 | Schlitz |
| 11.1 | Radkranz | 20.3 | Rolle |
| 11.2 | Speiche | 20.4 | Ausnehmung |
| 11.3 | Radring | 20.5 | Feder |
| 12 | Rad/Nachlaufrad | 21 | Bodenteil |
| 12.1 | Radkranz | 21.1 | Ausnehmung |
| 12.2 | Speiche | 21.2 | Gefach |
| 12.3 | Radring | 21.3 | Stützfläche |
| | | 21.4 | Stützfläche |
| 13 | Achsrohr | 21.6 | Riegel |
| 14 | Längsträger | 21.7 | kongruente Ausnehmung |
| 14.1 | Ausnehmung | 21.8 | Rippe |
| 15 | Horn | 21.9 | Stützfläche |
| 15.1 | Zapfen | 23 | Hebel |
| 15.2 | Stützfläche | 24 | Röhre |
| 15.3 | Stützfläche | 24.1 | Buchse |
| 15.4 | Flansch | 26 | Oberteil |
| 15.5 | Verriegelungsnut | | |
| 15.6 | Zentrierfläche | 30 | Antriebsmotoren |
| 15.7 | Abdeckung | 30.1 | Rastbolzen |
| | | 30.2 | Nut/Rastnut |
| 16 | Anschluss | 30.3 | Nut/Freilauf |
| 16.1 | Magnet | | |
| 17 | Achsschenkel | 40 | Akkumulator |
| 40.1 | Golfschlägergriffe | 54 | Zugbandführung |
| 40.2 | Golfschlägerköpfe | 55 | Trage- und Entsperrungsgriff |
| 41 | Gegenanschluss | | |
| 42 | Haltemagnet | A | Aufstandsfläche/Untergrund |
| 50 | Sperrstück | Dᵢ | Innendurchmesser |
| 51 | Druckfeder | L | Längsrichtung |
| 52 | Zugbänder | U | Umfangsrichtung |
| 53 | Umlenkrollen | | |

## Patentansprüche

1. Fahrzeug mit
(a) einer elektromotorisch betriebenen Antriebseinheit (1) und
(b) einer mit der Antriebseinheit (1) lösbar verbindbaren Applikation (2),
(c) wobei die Antriebseinheit (1) zwei an einem Achsrohr (13) gegenüberliegend angeordnete, einzeln antreibbare Antriebsräder (10, 11) und
(d) ein an einem mittig mit dem Achsrohr (13) verbundenen Längsträger (14) angeordnetes drittes Rad (12) aufweist,
**gekennzeichnet durch**
(e) ein mittig am Achsrohr (13) ausgebildetes Horn (15), das
(i) bezogen auf eine Aufstandsfläche (A) der Räder (10, 11, 12) nach oben weist und das
(ii) mindestens einen in Richtung eines der Antriebsräder (10, 11) weisenden Zapfen (15.1),
(iii) mindestens eine das Achsrohr (13) zumindest teilweise umgebende erste Stützfläche (15.2) und
(iv) mindestens eine zwischen dem Achsrohr (13) und dem Längsträger (14) angeordnete zweite Stützfläche (15.3)
aufweist, mittels derer die Applikation (2) form- und kraftschlüssig mit der Antriebseinheit (1) verbindbar ist.

2. Fahrzeug nach Anspruch 1, **dadurch gekennzeichnet, dass** die Antriebseinheit ein Golftrolley (1) und die Applikation eine Golftasche (2) ist.

3. Fahrzeug nach einem der vorstehenden Ansprüche, **dadurch gekennzeichnet, dass** zwei einander gegenüberliegende Zapfen (15.1) und/oder erste Stützflächen (15.2) und/oder zweite Stützflächen (15.3) vorgesehen sind.

4. Fahrzeug nach einem der vorstehenden Ansprüche, **dadurch gekennzeichnet, dass** das Horn (15) einen Flansch (15.5) aufweist, an dem der Längsträger (14) lösbar befestigbar ist.

5. Fahrzeug nach einem der vorstehenden Ansprüche, **dadurch gekennzeichnet, dass** der Längsträger (14) eine Ausnehmung (14.1) zur Aufnahme eines Akkumulators (40) aufweist.

6. Fahrzeug nach Anspruch 5, **dadurch gekennzeichnet, dass** in der Ausnehmung (14.1) ein Anschluss (16) vorgesehen ist, mit dem der Akkumulator (40) über einen an ihm ausgebildeten Gegenanschluss (41) zur elektrischen Verbindung mit den Antriebsmotoren (30) mechanisch koppelbar ist.

7. Fahrzeug nach Anspruch 6, **dadurch gekennzeichnet, dass** der Anschluss (16) einen Magnet (16.1) aufweist, über den die mechanische Verbindung von Anschluss (16) und Gegenanschluss (41) herstellbar ist.

8. Fahrzeug nach einem der vorstehenden Ansprüche, **dadurch gekennzeichnet, dass** die Applikation (2) in ihrem Bodenteil (21) eine zur Form des Horns (15) kongruente Ausnehmung (21.7) aufweist.

9. Fahrzeug nach einem der vorstehenden Ansprüche, **dadurch gekennzeichnet, dass** die Applikation (2) in ihrem Bodenteil (21) mindestens einen federbelasteten Riegel (21.6) oder ein federbelastetes Sperrstück (50) aufweist.

10. Fahrzeug nach Anspruch 9, **dadurch gekennzeichnet, dass** der mindestens eine Riegel (21.6) schwenkbar angeordnet ist.

11. Fahrzeug nach einem der Ansprüche 8 - 10, **dadurch gekennzeichnet, dass** die Applikation (2) einen Zughebel aufweist, über den eine Schwenkbewegung des mindestens einen Riegels (21.6) einleitbar ist.

12. Fahrzeug nach einem der Ansprüchen 2-11, **dadurch gekennzeichnet, dass** die Golftasche (2) mehrteilig ausgebildet ist und ein Bodenteil (21) und eine Hülle (20) aufweist, die miteinander fest verbunden sind.

13. Fahrzeug nach Anspruch 12, **dadurch gekennzeichnet, dass** die Hülle (20) an ihrem dem Bodenteil (21) zugewandten Ende diametral angeordnete, in Umfangsrichtung (U) verlaufende Schlitze (20.2) und in Längsrichtung (L) hierzu beabstandete und diametral in Umfangsrichtung (U) betrachtet nebeneinander angeordnete Klemmelemente (20.1) zum Einklemmen von Golfschlägergriffen (40.1) aufweist.

14. Fahrzeug nach Anspruch 13, **dadurch gekennzeichnet, dass** das Bodenteil (21) in dem Bereich der Schlitze (20.2) eine Mehrzahl von Gefachen (21.2) zur Aufnahme von Golfschlägerköpfen (40.2) aufweist.

15. Fahrzeug nach einem der vorstehenden Ansprüche, **dadurch gekennzeichnet, dass** an der Applikation (2) ein Hebel (22) vorzugsweise schwenkbar befestigt ist, der die für die Steuerung der Antriebsmotoren (30) notwendigen Bedienelemente umfasst.

## Claims

1. A vehicle with
(a) a drive unit (1) powered by an electric motor and
(b) an application (2) that is detachably connected to the drive unit (1),
(c) wherein the drive unit (1) comprises two drive wheels (10, 11) that are arranged opposite each other on an axle tube (13) and can be individually driven, and
(d) a third wheel (12) arranged on a side member (14) that is centrally connected to the axle tube (13),
**characterised by**
(e) a horn (15) configured centrally on the axle tube (13) which
(i) points upwards in relation to a contact area (A) of the wheels (10, 11, 12) and which comprises
(ii) at least one pin (15.1) pointing in the direction of one of the drive wheels (10, 11),
(iii) at least a first support surface (15.2) that at least partially surrounds the axle tube (13) and
(iv) at least a second support surface (15.3) arranged between the axle tube (13) and the side member (14),
by means of which the application (2) can be connected to the drive unit (1) in a form-fitting and force-fitting manner.

2. The vehicle according to claim 1, **characterised in that** the drive unit has a golf trolley (1) and the application is a golf bag (2).

3. The vehicle according to one of the preceding claims, **characterised in that** two pins (15.1) and/or first support surfaces (15.2) and/or second support surfaces (15.3) arranged opposite each other are provided.

4. The vehicle according to one of the preceding claims, **characterised in that** the horn (15) comprises a flange (15.5) to which the side member (14) is attached such that it can be detached.

5. The vehicle according to one of the preceding claims, **characterised in that** the side member (14) comprises a recess (14.1) for accommodating a rechargeable battery (40).

6. The vehicle according to claim 5, **characterised in that** a connector (16) is provided in the recess (14.1) by means of which the rechargeable battery (40) can be mechanically coupled with the drive motors (30) via a counter-connector (41) configured on said rechargeable battery for the purposes of electrical connection.

7. The vehicle according to claim 6, **characterised in that** the connector (16) comprises a magnet (16.1) by means of which the mechanical connection between connector (16) and counter-connector (41) can be established.

8. The vehicle according to one of the preceding claims, **characterised in that** the application (2) comprises a recess (21.7) in its base part (21) that matches the shape of the horn (15).

9. The vehicle according to one of the preceding claims, **characterised in that** the application (2) comprises at least one spring-loaded latch (21.6) or a spring-loaded locking piece (50) in its base part (21).

10. The vehicle according to claim 9, **characterised in that** the at least one latch (21.6) is arranged such that it can be swivelled.

11. The vehicle according to one of the claims 8 - 10, **characterised in that** the application (2) comprises a lever by means of which a swivel movement of the at least one latch (21.6) can be induced.

12. The vehicle according to one of the claims 2 - 11, **characterised in that** the golf bag (2) is designed to have multiple parts and comprises a base part (21) and a cover (20) that are permanently connected to each other.

13. The vehicle according to claim 12, **characterised in that** the cover (20) comprises diametrically arranged slits (20.2) at the end facing the base part (21), said slits extending in the circumferential direction (U), and clamping elements (20.1) that are spaced apart in the longitudinal direction (L) thereto and arranged diametrically adjacent to one another in the circumferential direction (U) for the purpose of clamping golf club handles (40.1).

14. The vehicle according to claim 13, **characterised in that** the base part (21) comprises a plurality of compartments (21.2) in the area of the slits (20.2) for accommodating golf club heads (40.2).

15. The vehicle according to one of the preceding claims, **characterised in that** a lever (22) is preferably pivotably attached to the application (2), the former comprising the operating elements required for controlling the drive motors (30).

## Revendications

1. Véhicule comprenant
(a) une unité d'entraînement (1) à moteur électrique, et
(b) une application (2) susceptible d'être reliée de manière amovible à l'unité d'entraînement (1),
(c) l'unité d'entraînement (1) comportant deux roues motrices (10, 11) disposées à l'opposé l'une de l'autre sur un tube d'essieu (13) et pouvant être entraînées individuellement, et
(d) une troisième roue (12) disposée sur un longeron (14) relié au centre du tube d'essieu (13),
**caractérisé par**
(e) un cornet (15) formé au centre du tube d'essieu (13), qui
(i) est orienté vers le haut par rapport à une surface d'appui (A) des roues (10, 11, 12) et qui présente
(ii) au moins un tenon (15.1) orienté vers l'une des roues motrices (10, 11),
(iii) au moins une première surface de support (15.2) entourant au moins partiellement le tube d'essieu (13), et
(iv) au moins une deuxième surface de support (15.3) disposée entre le tube d'essieu (13) et le longeron (14),
au moyen desquelles l'application (2) peut être reliée par complémentarité de forme et par adhérence à l'unité d'entraînement (1).

2. Véhicule selon la revendication 1, **caractérisé en ce que** l'unité d'entraînement est un chariot de golf (1), et l'application est un sac de golf (2).

3. Véhicule selon l'une des revendications précédentes, **caractérisé en ce qu'**il est prévu deux tenons (15.1) et/ou premières surfaces de support (15.2) et/ou deuxièmes surfaces de support (15.3) opposé(e)s l'un(e) à l'autre.

4. Véhicule selon l'une des revendications précédentes, **caractérisé en ce que** le cornet (15) comporte une bride (15.5) sur laquelle le longeron (14) peut être fixé de manière amovible.

5. Véhicule selon l'une des revendications précédentes, **caractérisé en ce que** le longeron (14) présente un évidement (14.1) destiné à recevoir un accumulateur (40).

6. Véhicule selon la revendication 5, **caractérisé en ce qu'**un raccord (16) est prévu dans l'évidement (14.1), grâce auquel l'accumulateur (40) peut être couplé mécaniquement aux moteurs d'entraînement (30) via un raccord complémentaire (41) formé sur ledit accumulateur pour la connexion électrique.

7. Véhicule selon la revendication 6, **caractérisé en ce que** le raccord (16) comporte un aimant (16.1) permettant d'établir la liaison mécanique entre le raccord (16) et le raccord complémentaire (41).

8. Véhicule selon l'une des revendications précédentes, **caractérisé en ce que** l'application (2) présente dans sa partie inférieure (21) un évidement (21.7) de forme congruente avec celle du cornet (15).

9. Véhicule selon l'une des revendications précédentes, **caractérisé en ce que** l'application (2) comporte dans sa partie inférieure (21) au moins un verrou (21.2) sollicité par ressort ou une pièce de blocage (50) sollicitée par ressort.

10. Véhicule selon la revendication 9, **caractérisé en ce que** ledit au moins un verrou (21.2) est disposé de manière à pouvoir pivoter.

11. Véhicule selon l'une des revendications 8 à 10, **caractérisé en ce que** l'application (2) comporte un levier de traction (22) permettant d'initier un mouvement pivotant dudit au moins un verrou (21.6).

12. Véhicule selon l'une des revendications 2 à 11, **caractérisé en ce que** le sac de golf (2) est réalisé en plusieurs parties et comprend une partie inférieure (21) et une housse (20) qui sont solidaires l'une de l'autre.

13. Véhicule selon la revendication 12, **caractérisé en ce que** la housse (20) présente, à son extrémité tournée vers la partie inférieure (21), des fentes (20.2) disposées diamétralement, s'étendant dans la direction circonférentielle (U), et des éléments de serrage (20.1) espacés dans la direction longitudinale (L) par rapport à celles-ci et disposés diamétralement les uns à côté des autres dans la direction circonférentielle (U), destinés à serrer des manches de club de golf (40.1).

14. Véhicule selon la revendication 13, **caractérisé en ce que** la partie inférieure (21) présente, dans la zone des fentes (20.2), une pluralité de compartiments (21.2) destinés à recevoir des têtes de club de golf (40.2).

15. Véhicule selon l'une des revendications précédentes, **caractérisé en ce qu'**un levier (23) est fixé à l'application (2), de préférence de manière à pouvoir pivoter, lequel comprend les éléments de manœuvre nécessaires à la commande des moteurs d'entraînement (30).
